# EUROPÄISCHE PATENTSCHRIFT

(11) **EP 2 768 371 B1**
(45) Veröffentlichungstag und Bekanntmachung des Hinweises auf die Patenterteilung: **02.03.2016**
(21) Anmeldenummer: 12791081.8
(22) Anmeldetag: 17.10.2012
(51) Int. Cl.: A47L 9/04, A46B 13/00

(54) **LAGERANORDNUNG EINER ROTIERENDEN BÜRSTENWALZE**
BEARING ARRANGEMENT OF A ROTATING BRUSH ROLLER
ENSEMBLE PALIER DE BROSSE ROTATIVE

(30) Priorität: 18.10.2011 DE 102011116418
(43) Veröffentlichungstag der Anmeldung: 27.08.2014
(73) Patentinhaber: Stein & Co. GmbH, D-42553 Velbert (DE)
(72) Erfinder: STEIN, Thomas, 42553 Velbert (DE); LIFFERS, Achim, 42553 Velbert (DE)
(74) Vertreter: Marschall, Stefan
(86) Internationale Anmeldenummer: PCT/DE2012/001027
(87) Internationale Veröffentlichungsnummer: WO 2013/056695

(56) Entgegenhaltungen:
- EP-A2- 1 639 932
- WO-A1-2006/061045
- WO-A1-2011/125580
- DE-C1- 19 728 380

## Beschreibung

Die Erfindung bezieht sich auf eine Lageranordnung einer rotierenden Bürstenwalze eines Bodenpflegegerätes, insbesondere Teppichreinigungsgerät, in Form eines Bürststaubsaugers oder Bürstvorsatzes, wobei die Bürstenwalze durch außenliegende Endstücke über Lager in einer Trägervorrichtung eines Bürstgehäuses angeordnet ist und die Bürstenwalze einen spiralförmig verlaufenden Aufnahmeschacht mit einem außenliegenden Durchtrittsbereich zur Aufnahme und Halterung eines durchgehenden Bürstenstreifens sowie einer stirnseitigen Öffnung zur Zuführung und Entnahme aufweist und der Außenbereich durch ein Verschlussteil als Trägervorrichtung abgedeckt ist, wobei das Verschlussteil ein lösbares Teilelement aufweist, das eine stirnseitige Öffnung zur Entnahme des Bürstenstreifens freigibt.

Ausbildungen dieser Art zur rotierenden Aufnahme einer Bürstenwalze eines Bodenpflegegerätes sind in unterschiedlichen Ausbildungen bekannt. Es hat sich aber als nachhaltig erwiesen, dass zum Austausch eines
eingesetzten Bürstenstreifens das Bürstengehäuse teilweise mit Werkzeugen zu demontieren ist, um den Bürstenstreifen auszutauschen. Diese Maßnahme ist oftmals nur durch den Fachmann möglich und durch den Benutzer nur bedingt durchführbar.

Nach der DE 197 28 380 C1 ist ein entfernbares Verschlusselement zur Freigabe einer Öffnung in einem Lagerschild zum Austausch eines Bürstenstreifens aus einem Aufnahmeschacht bereits bekannt.

Die Aufgabe der Erfindung ist es, eine gattungsgemäße Lageranordnung für Bürstenwalzen zu schaffen, die auf einfache Weise werkzeugfrei einen Austausch eines durchgehenden Bürstenstreifens ermöglicht und dabei eine Beibehaltung der eingesetzten Bürstenwalze gewährleistet sowie einen Fadenabweiser zum Schutz der Lagerstellen ermöglicht.

Die Lösung dieser Aufgabe erfolgt erfindungsgemäß dadurch, dass das Teilelement mit einem Halteelement, wie ein Rastelement, für ein korrespondierendes entriegelbares Gegenlager im Bürstengehäuses lösbar festsetzbar ist und das Teilelement ein Segment eines konzentrisch zur Bürstenwalze angeordnetes Abweiserelement in Ergänzung eines feststehenden Abweiserelementes trägt, das mit einem Gegenelement in Form einer Rippe auf dem Bürstenwalzenkorpus als Fadenabweiser angeordnet ist, wobei die Bürstenwalze mit dem Gegenelement als Rippe aus Kunststoff mit den Abweiserelementen des Trägerelementes aus Metall korrespondiert.

Hierdurch wird auf einfache Weise eine stirnseitige Öffnung freigegeben, die einen Zugang zum Aufnahmeschacht mit dem Bürstenstreifen ermöglicht. Durch das Rastelement mit einer Entriegelung ist es dabei möglich, werkzeugfrei das Teilelement durch einen Nichtfachmann zu entfernen und wieder festzusetzen und zusätzlich die Ausbildung eines Fadenabweisers zum Schutz der Lagerstellen zu ermöglichen.

Eine vorteilhafte Ausbildung besteht darin, dass die durch das Teilelement des Verschlussteils freigegebene Öffnung im oberen Bereich eines Rotationskreises der Bürstenwalze gebildet ist.

In Weiterbildung der Erfindung ist vorgesehen, dass das Lager in der Trägervorrichtung festgesetzt ist und ein Wellenende der Bürstenwalze verschiebbar in dem Lager als Gleitlager angeordnet ist.

Alternativ wird vorgeschlagen, dass das Lager als Kugellager an einem Wellenende der Bürstenwalze festgesetzt und in der Trägervorrichtung verschiebbar angeordnet ist.

In der Zeichnung ist eine Lageranordnung gemäß der Erfindung schematisch dargestellt. Es zeigen:

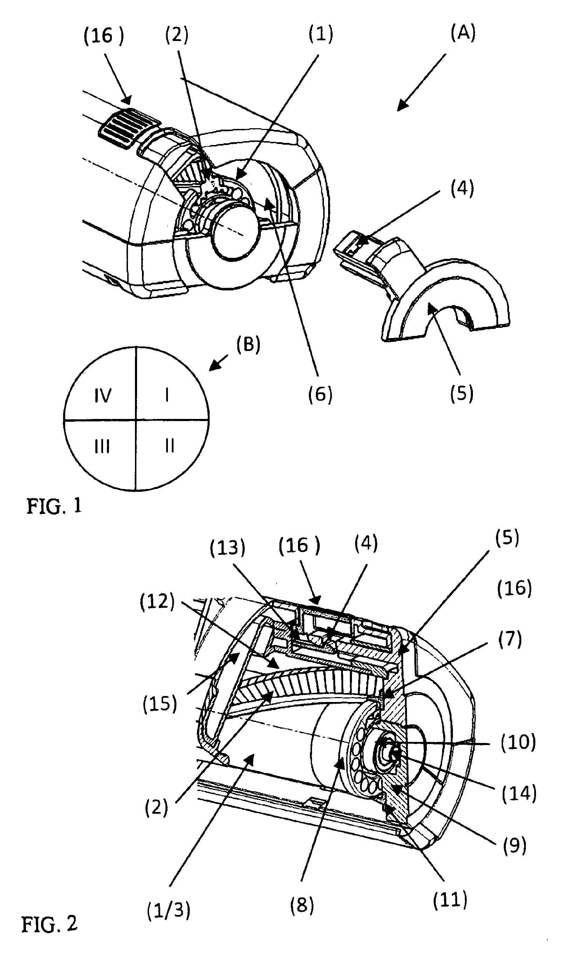

- Fig. 1: eine schaubildliche Darstellung der Lageranordnung mit abgenommenem Teilelement und Zuordnung der Quadranten eines Rotationskreises,
- Fig. 2: eine perspektivische Darstellung der Lageranordnung mit eingesetztem Teilelement im Schnitt,

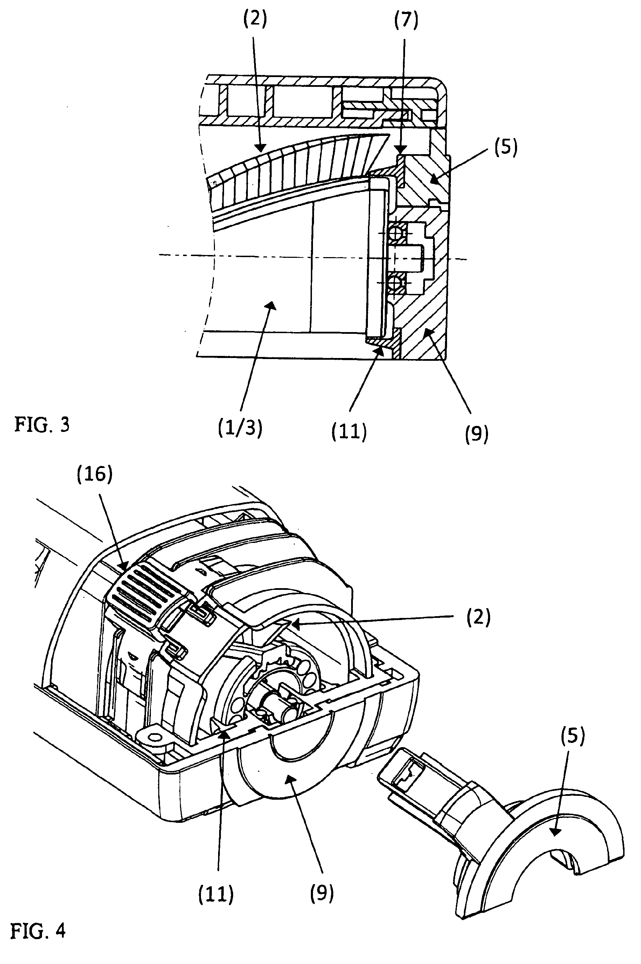

- Fig. 3: einen Vertikalschnitt eines Teils der Lageranordnung mit eingesetztem Teilelement und
- Fig. 4: eine weitere schaubildliche Darstellung der Lageranordnung mit abgenommenem Teilelement

Bei dieser Anordnung ist eine Bürstenwalze 1 über Endstücke in einer Lagerkonstruktion A von einem Gehäuse 15 unter Ausbildung eines Wellentunnels 12 angeordnet. Hierbei ist im Bürstenwalzenkorpus 3 ein spiralförmig verlaufender Aufnahmeschacht mit einem entnehmbaren Bürstenstreifen 2 angeordnet. Die Lagerkonstruktion A mit einem Lager 10 zur Aufnahme eines Wellenendes 14 der Bürstenwalze 1 ist dabei in einer Trägervorrichtung 9 des Gehäuses 15 angeordnet.

Die Lagerkonstruktion A ist durch ein Verschlussteil als Trägervorrichtung 9 mindestens an einer Stirnseite des Gehäuses 15 abgedeckt und besteht aus einem ortsfesten Element und einem lösbaren Teilelement 5, das eine stirnseitige Öffnung 6 zur Entnahme des Bürstenstreifens 2 freigibt. Dieses Teilelement 5 ist in diesem Fall mit einem Rastelemement 4 für ein korrespondierendes Gegenlager 13 im Bürstengehäuse 15 lösbar festsetzbar und über eine Taste 16 entriegelbar. Dabei bildet das Teilelement 5 einen Teil der Trägervorrichtung 9. Durch die Entnahme des Teilelementes 5 wird somit die Öffnung 6 sowie die stirnseitige Öffnung zum Aufnahmeschacht des Bürstenstreifens 2 freigegeben.

Ferner trägt das Teilelement 5 ein Segment eines konzentrisch zur Bürstenwalze 1 angeordnetes Abweiserelementes 7, das mit einem Gegenelement 8 in Form eines Wulstes der Bürstenwalzenkorpus 3 korrespondiert, um einen Fadenabweiser zum Schutz der Lagerstellen zu bilden.

Es ist dabei vorgesehen, dass die Trägervorrichtung 9 für das Lager 10 der Bürstenwalze 1 aus Kunststoff gebildet ist und ein Abweiserelement 11 aus Metall aufweist, das mit dem Gegenelement 8 als Wulst aus Kunststoff auf dem Bürstenwalzenkorpus 3 korrespondiert.

Ferner ist vorgesehen, das Lager 10 in der Trägervorrichtung festzusetzen, wobei das Wellenende 14 der Bürstenwalze 1 verschiebbar in dem Lager 10 als Gleitlager angeordnet ist.

Alternativ ist das Lager 10 als Kugellager an dem Wellenende 14 der Bürstenwalze 1 festgesetzt und in der Trägervorrichtung verschiebbar angeordnet.

## Patentansprüche

1. Lageranordnung einer rotierenden Bürstenwalze (1) eines Bodenpflegegerätes, insbesondere Teppichreinigungsgerät, in Form eines Bürststaubsaugers oder Bürstvorsatzes, wobei die Bürstenwalze (1) durch außenliegende Endstücke über Lager in einer Trägervorrichtung (9) eines Bürstgehäuses angeordnet ist und die Bürstenwalze (1) einen spiralförmig verlaufenden Aufnahmeschacht mit einem außenliegenden Durchtrittsbereich zur Aufnahme und Halterung eines durchgehenden Bürstenstreifens (2) sowie einer stirnseitigen Öffnung zur Zuführung und Entnahme aufweist und der Außenbereich durch ein Verschlussteil als Trägervorrichtung (9) abgedeckt ist, wobei das Verschlussteil ein lösbares Teilelement (5) aufweist, das eine stirnseitige öffnung zur Entnahme des Bürstenstreifens (2) freigibt, **dadurch gekennzeichnet, dass** das Teilelement (5) mit einem Halteelement (4), wie ein Rastelement, für ein korrespondierendes entriegelbares Gegenlager (13) im Bürstengehäuses (15) lösbar festsetzbar ist und das Teilelement (5) ein Segment eines konzentrisch zur Bürstenwalze (1) angeordnetes Abweiserelement (7) in Ergänzung eines feststehenden Abweiserelementes (11) trägt, das mit einem Gegenelement (8) in Form einer Rippe auf dem Bürstenwalzenkorpus (3) als Fadenabweiser angeordnet ist, wobei die Bürstenwalze (1) mit dem Gegenelement (8) als Rippe aus Kunststoff mit den Abweiserelementen (7, 11) des Trägerelementes (9) aus:Metall korrespondiert.

2. Lageranordnung nach Anspruch 1, **dadurch gekennzeichnet, dass** die durch das Teilelement (5) der Trägervorrichtung (9) freigegebene Öffnung (6) im oberen Bereich eines Rotationskreises der Bürstenwalze (1) gebildet ist.

3. Lageranordnung nach Anspruch 1 oder 2, **dadurch gekennzeichnet, dass** das Lager (10) in der Trägervorrichtung (9) festgesetzt ist und ein Wellenende (14) der Bürstenwalze 1 verschiebbar in dem Lager (10) als Gleitlager angeordnet ist.

4. Lageranordnung nach einem der Ansprüche 1 bis 3, **dadurch gekennzeichnet, dass** das Lager (10) als Kugellager an einem Wellenende (14) der Bürstenwalze (1) festgesetzt und in der Trägervorrichtung (9) verschiebbar angeordnet ist.

## Claims

1. A bearing arrangement of a rotating brush roller (1) of a floor cleaning device, in particular carpet cleaning device in the form of a brush vacuum cleaner or brush attachment, wherein the brush roller (1) is arranged in a support device (9) of a brush housing via end pieces located on the outside and the brush roller (1) has a receiving shaft, which runs in the shape of a spiral, comprising a passage area located on the outside for receiving and holding a continuous brush strip (2) as well as a frontal opening for supply and removal and the outer area is covered by a closing part as support device (9), wherein the closing part has a releasable partial element (5), which releases a frontal opening for removing the brush strip (2), **characterized in that** the partial element (5) can be releasably fixed in the brush housing (15) by means of a holding element (4), such as a latching element, for a corresponding unlockable counter bearing (13), and the partial element (5) supports a segment of a deflector element (7), which is arranged concentrically to the brush roller (1) in addition to a fixed deflector element (11), which is arranged on the brush roller body (3) as thread deflector by means of a counter element (8) in the form of a rib, wherein the brush roller (1) comprising the counter element (8) as rib made of plastic corresponds to the deflector elements (7, 11) of the support element (9) made of metal.

2. The bearing arrangement according to claim 1, **characterized in that** the opening (6), which is released by the partial element (5) of the support device (9), is formed in the upper area of a rotation circuit of the brush roller (1).

3. The bearing arrangement according to claim 1 or 2, **characterized in that** the bearing (10) is fixed in the support device (9) and a shaft end (14) of the brush roller (1) is movably arranged in the bearing (10) as slide bearing.

4. The bearing arrangement according to one of claims 1 to 3, **characterized in that** the bearing (10) is fixed as ball bearing on a shaft end (14) of the brush roller (1) and is movably arranged in the support device (9).

## Revendications

1. Dispositif de palier d'une brosse cylindrique (1) d'un élément d'entretien du sol, notamment d'un appareil de nettoyage de tapis sous la forme d'un aspirateur-brosseur ou d'un équipement de brosses, la brosse cylindrique (1) étant placée par des pièces d'extrémité extérieures par l'intermédiaire de paliers dans un dispositif support (9) d'un carter de brosse et la brosse cylindrique (1) comportant un puits de logement s'étendant en forme de spirale avec une zone de passage extérieure pour le logement et le maintien d'une bande de brosse (2) traversante, ainsi qu'une ouverture côté frontal pour l'amenage et le retrait et la zone extérieure étant recouverte par une pièce de fermeture en tant que dispositif support (9), la pièce de fermeture comportant un élément partiel (5) amovible qui libère une ouverture côté frontal pour le retrait de la bande de brosse (2), **caractérisé en ce que** l'élément partiel (5) peut être immobilisé de manière amovible par un élément de maintien (4) comme un élément d'enclenchement pour un contre-appui (13) déverrouillable correspondant dans le carter de brosse (15) et l'élément partiel (5) portant un segment d'un élément déflecteur (7) placé de manière concentrique par rapport à la brosse cylindrique (1), en complément d'un élément déflecteur (11) stationnaire qui par un élément antagoniste (8) sous la forme d'une nervure est placé en tant que déflecteur de fils sur le corps (3) de la brosse cylindrique, la brosse cylindrique (1) correspondant par l'élément antagoniste (8), en tant que nervure en matière plastique avec les éléments déflecteurs (7, 11) de l'élément support (9) en métal.

2. Dispositif de palier selon la revendication 1, **caractérisé en ce que** l'ouverture (6) libérée par l'élément partiel (5) du dispositif support (9) est formée dans la zone supérieure d'un cercle de rotation de la brosse cylindrique (1).

3. Dispositif de palier selon la revendication 1 ou la revendication 2, **caractérisé en ce que** le palier (10) est immobilisé dans le dispositif support (9) et une extrémité d'arbre (14) de la brosse cylindrique (1) est placée de manière coulissante dans le palier (10) en tant que palier à glissement.

4. Dispositif de palier selon l'une quelconque des revendications 1 à 3, **caractérisé en ce que** le palier (10) en tant que roulement à billes est immobilisé sur une extrémité d'arbre (14) de la brosse cylindrique (1) et est placé de manière coulissante dans le dispositif support (9).
